# EUROPEAN PATENT APPLICATION

(11) **EP 3 025 787 A1**
(43) Date of publication of application: **01.06.2016**
(21) Application number: 14194951.1
(22) Date of filing: 26.11.2014
(51) Int. Cl.: B03D 1/14, B03D 1/24

(54) **APPARATUS AND PROCESS FOR MOISTURE REMOVAL FROM OIL**

(71) Applicant: Parker Hannifin VAS Netherlands BV, 7575 AT Oldenzaal (NL)
(72) Inventor: ten Elsen, Patrick Antonius Johannes, 7575 AT Oldenzaal (NL); Brands, Gerben, 7575 AT Oldenzaal (NL)
(74) Representative: De Vries & Metman

(57) **Abstract**

Method and apparatus (1, 41) for separating water from oil. The apparatus comprises:
- at least one column (5, 45) with an oil inlet (17, 52), an inlet for a stripping gas (21, 65), and an oil outlet (7, 49) downstream the stripping gas inlet;
- a vessel (3, 43) for collecting oil from the column;
- one or more degasification plates (9; 53, 54) for guiding oil as a film from the oil outlet of the column to the vessel. The stripping gas can for example be purified nitrogen.

## Description

The invention pertains to an apparatus and a method for separating moisture from oil, in particular hydraulic oil or lubrication oil, such as biodegradable oil or mineral oils.

Oil, e.g., used for lubrication, can contain water, which has a negative impact on the durability and quality of the oil.

Because of their environmental friendly nature biodegradable oils are increasingly used as lubricants. New regulations, particularly in the US, even prescribe such biodegradable lubricants for use in ships. Such biodegradable oils can have a high water content because of their hygroscopic nature. Besides reducing lubrication capacity such a high water content can also increase the risk of corrosion and growth of bacteria.

Systems have been proposed for stripping moisture from oil by preheating the oil and by blowing pressurized air through it. In practice such systems are not sufficiently effective, particularly not with biodegradable oils, and their energy consumption is relatively high. Moreover, such stripping may result in degradation of the treated oil.

It is an object of the invention to provide a system enabling more efficient removal of water from oil with less energy consumption.

The object of the invention is achieved with an apparatus for separating water from oil comprising:
- at least one column with an oil inlet, an inlet for a stripping gas, and with an oil outlet downstream the stripping gas inlet;
- a vessel for collecting oil from the column;
- one or more degasification plates for guiding oil as a film from the oil outlet of the column to the vessel.

Oil leaving the column will flow over the degasification plates as an oil film allowing the stripping gas to escape the oil film together with the stripped moisture. This facilitates easier removal of the stripping gas from the oil and it enables use of smaller stripping gas bubbles. Very small bubbles can only escape oil if the oil flows as a film. It was found that using such small bubbles substantially improves water removal efficiency. The moisture content can be reduced to values well below 7 wt.% by weight of the oil.

In offshore environments the water content in the oil may contain salt. During stripping the stripping gas takes up water in a vaporized state. When the stripping gas bearing the water vapor escapes from the oil film on the degasification plate, the salt is left behind on the degasification plate.

In a specific embodiment, the one or more degasification plates may gradually slope down from the oil outlet of the column to a lower section of the vessel. To increase the residence time on the plate, the slope of the gasification plate may be less than 30 degrees, e.g., less than 20 degrees, e.g., less than 10 degrees.

The column can be positioned in the vessel, for instance centrally or adjacent a side wall of the vessel.

The oil outlet of the column can for example be formed by an open top end of the column. In that case, the open top end of the column may for example have at least one edge connecting to an upper edge of the degasification plate sloping down into the direction of an inner wall of the vessel. Oil flows down into the vessel, e.g., via a gap between the vessels' inner wall and the degasification plate. In the vessel it will sink down. Suction filters can be used to protect any present pumps. Instead of, or in addition to, a gap the plate may comprise openings or perforations allowing the oil to drip or flow down into the vessel.

Optionally, a higher edge section of a next sloping degasification plate is positioned below said gap. In a more specific embodiment, the apparatus may comprise a series of degasification plates or strips alternately sloping down into opposite directions with upper sections below lower edges of a next higher strip to create a zigzag flow path for the oil flowing down. This can considerably increase the surface area available for degasification of the oil film. Optionally, such strips may be part of a removable cassette. Optionally, the mutual distance between the strips and/or their inclination angle can be adjustable, e.g., as a function of the oil viscosity.

To improve stripping gas distribution and average bubble size, the stripping gas inlet may optionally be provided with a strainer. The strainer reduces the average bubble size. Smaller bubbles provide better distribution of the stripping gas and do not easily flow to the oil surface. This substantially increases the residence time of the stripping gas in the oil. As explained above it has been found that this significantly improves water scavenging effectiveness of the stripping gas.

A higher oil quality can be maintained if a stripping gas is used which is substantially inert for the oil to be stripped. The stripping gas inlet can for example be connected to a source of a stripping gas with a nitrogen content higher than the nitrogen content of ambient air, e.g., at least 95 mol.% nitrogen, or essentially pure nitrogen. Other inert gases may also be used. An efficient manner for using nitrogen gas is to use a source of pressurized gas connected to at least one filter, such as a filter membrane, removing at least the oxygen content from the air flow before it passes the stripping gas inlet. This can result in a very dry nitrogen gas with improved capacity to remove water.

An apparatus may be used comprising a recirculation loop fluidly connecting an oil outlet of the vessel to an oil inlet of the column. The oil to be treated may pass the column a number of times, at least once, until it has sufficiently be dewatered. Such a recirculation loop may for example comprise at least one optional circulation pump and/or one or more optional sensors for measuring water and/or salt content, and optionally further sensors.

Oil typically floats on water. As a result, water content will be higher in the lower regions of the vessel. Therefore, the efficiency of the apparatus can substantially be improved by positioning the oil outlet feeding the recirculation loop near the bottom of the vessel. Optionally, the bottom of the vessel may slant down towards such an oil outlet.

Oil droplets may still be entrained in the discharged stripping gas. To remove these droplets the gas exhaust of the apparatus may be provided with an oil separator. The apparatus may comprise at least one return line from the gas discharge to the stripping gas supply, and/or at least one return line from the gas discharge to the oil inlet.

Optionally, stripping gas containing stripped water can be discharged to a water collection reservoir. Optionally, the stripping gas is cooled to promote condensation of its water content. The reservoir may contain a level sensor and a closeable outlet, which is opened when the level detected by the level sensor passes a set value. The number of times that the outlet needs to be opened is indicative for the dewatering efficiency of the apparatus.

The invention also relates to an apparatus for separating water from oil comprising at least one column with an oil inlet, an inlet for a stripping gas, and with an oil outlet downstream the stripping gas inlet, as disclosed above, wherein the stripping gas inlet is connected to a source of a dehumidified nitrogen gas, e.g. with an oxygen content below 2 mol.%, such as a filter connected to a source of pressurized air and configured to separate oxygen and/or water from the air to produce a nitrogen stripping gas.

The apparatus as disclosed can be used for a method for separating moisture from oil wherein stripping gas is first dispersed into the oil and subsequently the oil is flown over a degasification plate.

The invention also relates to a method and an apparatus for separating moisture from oil by using a substantially inert stripping gas, more particularly a stripping gas with an oxygen content below 10 mol.%, more preferably below 2 mol. %, for instance nitrogen gas. It has been found that such gases are just as effective water scavengers as pressurized air used in prior art systems. Contrary to air, such inert stripping gases do not have a negative impact on the oil quality.

The invention also relates to a method for separating moisture from oil by dispersing the stripping gas into the oil in a vessel and removing the stripping gas. The oil is recirculated via the vessel until its water content is below a set value.

The invention will be further explained with reference to the accompanying drawings showing an exemplary embodiment of an apparatus for removal of water from oil.
Figure 1: shows schematically an apparatus for the removal of water from oil;
Figure 2: shows schematically an alternative embodiment of an apparatus for the removal of water from oil;
Figure 3: shows a further exemplary embodiment.

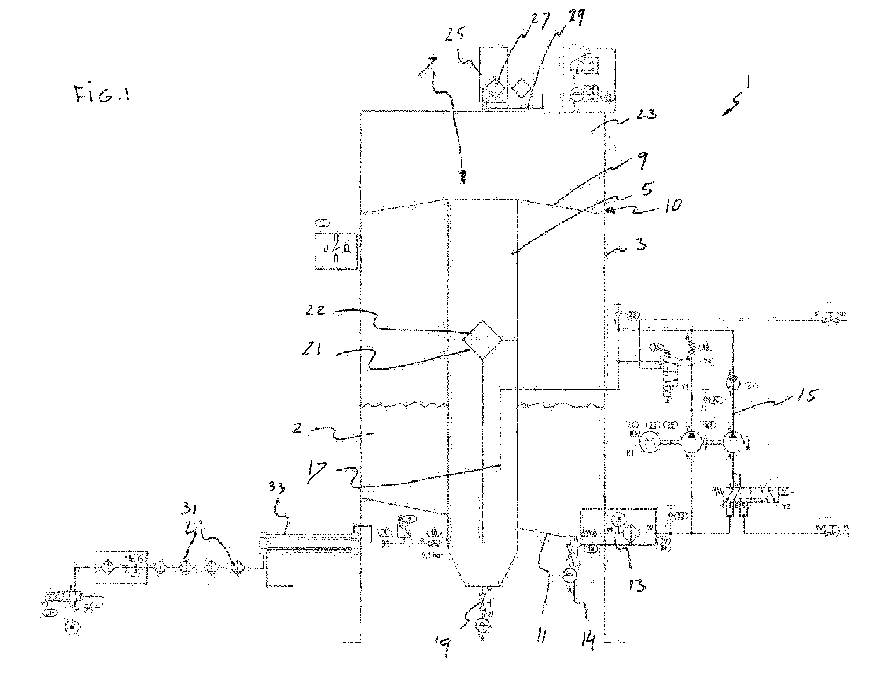

Figure 1 shows an apparatus 1 for removal of water from oil using a nitrogen gas flow. The apparatus 1 comprises a vessel 3 with a central column 5. The vessel 3 and the column 5 can for example be cylindrical or rectangular or have any other suitable cross section. The central column 5 has an open top end 7 collared by a degasification plate 9 having a reversed saucer shape slanting downwardly towards the inner wall of the vessel 3. A gap 10 remains between the outer edge of the degasification plate 9 and the inner wall of the vessel 3.

The vessel 3 has a bottom 11 sloping down towards an oil outlet 13, which is operatively connected to a recirculation loop 15 for returning oil to an oil inlet 17 about halfway the height of the central column 5. Close to the outlet 13 is a drain 14 for draining salt and water or oil-in-water emulsion.

The central column 5 comprises a drain 19 at its bottom end for removal of sunk water and salt. The drain 19 may for example be provided with a looking glass.

Just above the oil inlet 17 the central column 5 comprises a stripping gas inlet 21 to blow stripping gas into the oil within the column 5. The stripping gas inlet 21 comprises a strainer 22 to optimize distribution and dispersion of the stripping gas into the oil with bubbles of reduced average bubble size. Also the level of the stripping gas inlet 21 in the column 5 influences the average bubble size: at a lower level the oil pressure is higher and larger bubbles are obtained, which tend to flow upwardly faster. Positioning of the stripping gas inlet 21 at a higher level results in smaller bubbles, which in turn result in improved distribution of the stripping gas into the oil and tend to rise slower, resulting in a higher residence time and a higher dewatering efficiency. Nitrogen pressure and nitrogen consumption are substantially reduced.

The space 23 above the degasification plate 9 is connected to a stripping gas outlet 25 comprising an oil separator 27 and an exhaust 29.

The stripping gas in this exemplary embodiment is nitrogen obtained from air supplied via a series of optional filters 31 for removing contaminants, and via a permeable membrane 33 separating oxygen and moisture from the air in order to obtain a substantially pure and very dry nitrogen stripping gas. The nitrogen is blown into the central column 5 via the stripping gas inlet 21 with the strainer 22. A mixed flow of oil with nitrogen flows upwardly to the open top end 7 of the central column 5. The oil flows over the degasification plate 9 forming a film steadily sagging down to the edges of the degasification plate 9. Nitrogen with water escapes from the oil film. The dehydrated oil drips down from the edge of the degasification plate 9 via the gap 10 back into a bottom section 35 of the vessel 3. Instead of providing a gap 10, the degasification plate can be a perforated plate with openings allowing oil to drip or flow down.

In offshore or near shore environments the water content of the oil contains salt. When the stripping gas escapes from the oil film on the degasification plate salt is left behind on the degasification plate and may flow down with the oil.

Dehydrated oil 2 is collected in lower section 35 of the vessel 3. The dehydrated oil 2 is recirculated via the recirculation loop 15 from the oil outlet 13 at the bottom of the vessel 3 back into the column 5 via the oil inlet 17. This recirculation loop 15 may contain one or more sensors 37 for monitoring the water content and optionally also the salt content or further parameters. If the water content is sufficiently low, the recirculation can be stopped and the oil can be discharged from the apparatus 1. The vessel 3 can then be refilled via the inlet 17 with a new supply of oil to be treated.

Oil tends to float on water. As a result, oil 2 near the oil outlet 13 of the vessel 3 will have a higher water content than oil at a higher level, so high water content oil will be recirculated more often than the water-free part of the oil 2. This contributes to the dewatering efficiency of the apparatus 1.

In the space 23 above the central column 5 and the degasification plate 9 nitrogen is discharged via the oil separator 27. Optionally, the separated oil can be returned to the central column 5, the vessel 3 or the recirculation loop 15.

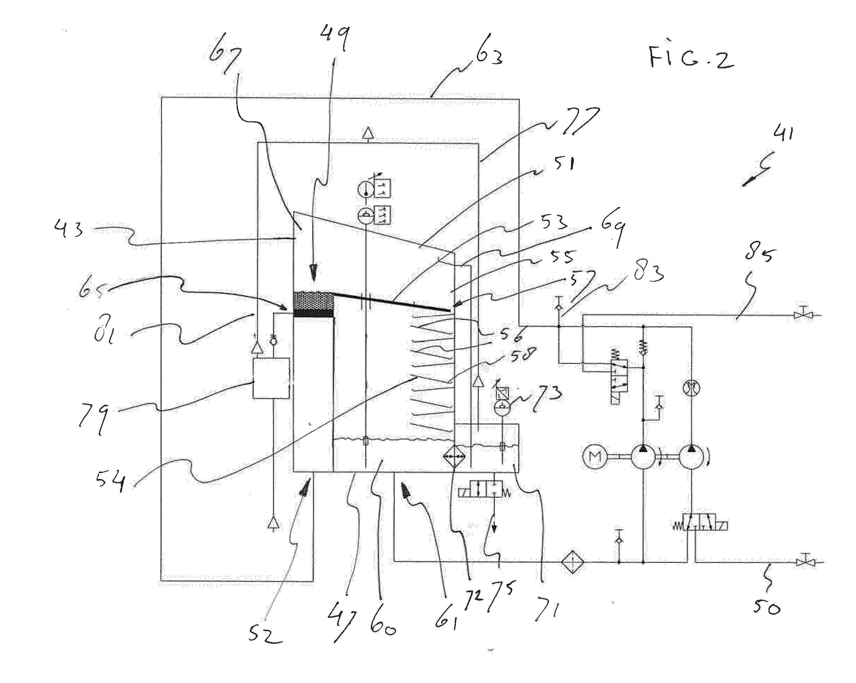

Figure 2 shows an alternative embodiment of an apparatus 41 for separating water from oil schematically in cross section. The apparatus 41 comprises a vessel 43 encasing a column 45 extending upwardly from the bottom 47 of the vessel 43 and having an open top end 49 at a distance below a closed top end 51 of the vessel 43. The column 45 may for example extend over the full width of the vessel 43, or over a part the vessels' width. In other possible embodiments the column may even be outside the vessel. The column 45 comprises an oil inlet 52 at its bottom connected to an oil supply line 50

A degasification plate 53 extends between an edge of the open top end 49 of the column 45 towards the opposite inner wall 55 of the vessel 43. A gap 57 remains between the outer edge of the degasification plate 53 and the inner wall 55 of the vessel 43.

Below the degasification plate is a vertical row of degasification strips 54 zigzagging down and alternately sloping down in opposite directions. The degasification strips 54 have a higher section 56 arranged below a lower edge 58 of the next higher degasification strip 54 and extending beyond the lower edge 58 of the next higher plate 54 so that oil dripping down from a degasification strip 54 is recollected by a next lower degasification strip 54 until the oil arrives at a lower section 60 of the vessel 43.

In the drawing the vessel 43 has a horizontal bottom 59 with an oil outlet 61, but like the vessel 3 in Figure 1 the vessel 43 may also be provided with a bottom sloping down towards the oil outlet 61. The oil outlet 61 is operatively connected to a recirculation loop 63 for returning oil to the oil inlet 52.

The column 45 comprises a stripping gas inlet 65 at a relatively short distance below its open top end 49 to blow stripping gas into the oil within the column 45. Just like the embodiment in Figure 1, the stripping gas inlet 65 comprises a strainer (not shown) to optimize distribution and dispersion of the stripping gas into the oil with bubbles of reduced average bubble size.

The space 67 above the degasification plate 9 is connected to a stripping gas discharge line 69 connecting to a water collection reservoir 71 containing a level sensor 73, a water outlet 75 and a stripping gas discharge line 77. The stripping gas discharge line 77 may comprise an oil separator. A heat pump 72 between the water collection reservoir 71 and the vessel 43 extracts heat from the water reservoir and transfers it to the oil in the vessel 43.

The stripping gas is nitrogen obtained from air supplied via a permeable membrane 79 separating oxygen from the air in order to obtain a substantially pure nitrogen stripping gas. The oxygen is discharged via an exhaust 81. The nitrogen is blown into the column 45 via the stripping gas inlet 65 with the strainer. A mixed flow of oil with nitrogen flows upwardly to the open top end 49 of the column 45. The oil flows over the degasification plate 53 forming a film steadily sagging down towards the gap 57. Nitrogen with water escapes from the oil film on the degasification plate 53. Dehydrated oil drips down from the edge of the degasification plate 53 via the gap 57 onto the highest degasification strip 54 back into the lower section 60 of the vessel 43. On the strip 54 it will sag down in an opposite direction, away from the wall 55 of the vessel 43 until it reaches the lower edge of the strip 54. Here the oil drips down onto the upper edge of the next lower degasification strip 54, where the oil continues its flow path meandering down until it reaches the lower section 60 of the vessel 43. The strips 54 effectively enlarge the surface area available for degasification of the oil, which substantially enhances the water removal efficiency of the apparatus 41.

Dehydrated oil is collected in lower section 60 of the vessel 43. The dehydrated oil is recirculated via the oil outlet 61 and the recirculation loop 63 back into the column 45 via the oil inlet 52. This recirculation loop 15 contains one or more optional sensors 83 for monitoring the water content and optionally also the salt content or further parameters. If the water content is sufficiently low, the oil recirculation loop 63 is closed and the oil is re-directed to an oil discharge 85.

Nitrogen with water vapor is discharged from the space 67 above the column 45 and the degasification plate 53 via the discharge line 69 to the water collection reservoir 71. The heat pump 72 cools the water reservoir and transfers heat to the oil in the vessel 53. This promotes condensation of the water content. In the vessel the increased oil temperature promotes the stripping efficiency. Condensed water is collected in the water collection reservoir 71. When the level sensor 75 detects that the water level passes a set value, the water outlet 75 is opened. The number of times that the outlet must be opened is indicative for the effectiveness of the apparatus 41.

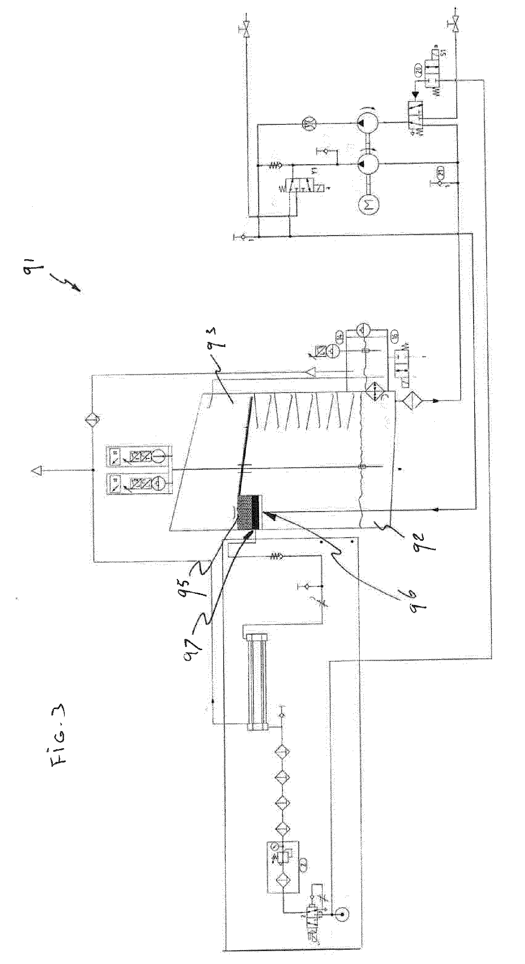

Figure 3 shows an embodiment of an apparatus 91 with a similar configuration as the apparatus 41 in Figure 2. However, it has a column 95 which does not extend to the bottom of the vessel 93. Rather the column 95 has a bottom 96 at a distance well above the oil level 92 in the vessel, just below a stripping gas inlet 97.

## Claims

1. Apparatus (1, 41) for separating water from oil comprising:
- at least one column (5, 45) with an oil inlet (17, 52), an inlet for a stripping gas (21, 65), and an oil outlet (7, 49) downstream the stripping gas inlet;
- a vessel (3, 43) for collecting oil from the column;
- one or more degasification plates (9; 53, 54) for guiding oil as a film from the oil outlet of the column to the vessel.

2. Apparatus according to claim 1 wherein the one or more degasification plates (9; 53, 54) gradually slope down from the oil outlet of the column (5, 45) to a lower section (35, 60) of the vessel.

3. Apparatus according to claim 1 or 2 wherein the oil outlet (7, 49) of the column (5, 45) comprises an open top end of the column.

4. Apparatus according to claim 3, wherein the open top end (7, 49) of the column (5, 45) has at least one edge connecting to an upper edge of the degasification plate (9, 53) sloping down into the direction of an inner wall of the vessel.

5. Apparatus according to any preceding claim, wherein a higher edge of a next sloping degasification plate is positioned below a gap (10, 57) between the degasification plate and the inner wall of the vessel.

6. Apparatus according to claim 5 comprising a series of degasification plates or strips (54) alternately sloping down into opposite directions with upper sections (56) below lower edges (58) of a next higher strip to create a zigzag flow path.

7. Apparatus according to any preceding claim, wherein the stripping gas inlet (21, 65) comprises a strainer.

8. Apparatus according to any preceding claim, wherein the stripping gas inlet (21, 65) is operatively connected to a source of a stripping gas (33, 79) with a nitrogen content higher than the nitrogen content of ambient air, e.g., at least 95 mol.% nitrogen.

9. Apparatus according to claim 8, wherein the stripping gas source comprises a source of pressurized gas connected to at least one N₂ permeable filter (33, 79) for removing at least the O₂ content from the air flow before it passes the stripping gas inlet (21, 65).

10. Apparatus according to any preceding claim, wherein the apparatus comprises a recirculation loop (15, 63) fluidly connecting an oil outlet (13, 61) of the vessel to an oil inlet (17, 52) of the column, optionally comprising one or more sensors (37, 83) for measuring water content and/or salt content.

11. Apparatus according to claim 10, wherein the bottom of the vessel slants down to the oil outlet (13, 61).

12. Apparatus according to any preceding claim comprising a gas discharge with an oil separator, e.g., with at least one return line from the oil separator to the oil inlet.

13. Method for separating moisture from oil wherein stripping gas is first dispersed into the oil and subsequently the oil is flown over a degasification plate.

14. Method for separating moisture from oil, optionally according to claim 13, using a stripping gas comprising at least 95 mol.% nitrogen.

15. Method for separating moisture from oil, optionally according to claim 13 or 14, by dispersing the stripping gas into the oil in a vessel and removing the stripping gas, wherein the oil is recirculated, e.g., until its water content is below a set value or until passage of a time period.
